(19) Europäisches Patentamt / European Patent Office / Office européen des brevets

(11) **EP 2 856 096 B1**

(12) **EUROPÄISCHE PATENTSCHRIFT**

(45) Veröffentlichungstag und Bekanntmachung des Hinweises auf die Patenterteilung:
**10.08.2016 Patentblatt 2016/32**

(21) Anmeldenummer: **13726550.0**

(22) Anmeldetag: **04.06.2013**

(51) Int Cl.:
**G01L 1/24** (2006.01)     **G01M 11/02** (2006.01)

(86) Internationale Anmeldenummer:
**PCT/EP2013/061499**

(87) Internationale Veröffentlichungsnummer:
**WO 2013/182567 (12.12.2013 Gazette 2013/50)**

(54) **OPTISCHES MESSSYSTEM MIT POLARISATIONSKOMPENSATION, SOWIE ENTSPRECHENDES VERFAHREN**

OPTICAL MESURING SYSTEM WITH POLARISATION COMPENSATION AS WELL AS CORRESPONDING METHOD

SYSTÈME OPTIQUE DE MESURE AVEC COMPENSATION DE POLARISATION ET UNE MÉTHODE CORRESPONDANTE

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **05.06.2012 DE 102012104874**

(43) Veröffentlichungstag der Anmeldung:
**08.04.2015 Patentblatt 2015/15**

(73) Patentinhaber: **Technische Universität München**
**80333 München (DE)**

(72) Erfinder:
• **BUCK, Thorbjörn**
**80636 München (DE)**
• **HOFFMANN, Lars**
**80796 München (DE)**
• **MÜLLER, Mathias**
**81541 München (DE)**
• **WOJTECH, Rolf**
**80689 München (DE)**

(74) Vertreter: **Zimmermann & Partner**
**Patentanwälte mbB**
**Postfach 330 920**
**80069 München (DE)**

(56) Entgegenhaltungen:
**US-A1- 2010 141 930**

**Beschreibung**

TECHNISCHES GEBIET

Die vorliegende Anmeldung betrifft allgemein ein Verfahren zur Justierung optischer Vorrichtungen, insbesondere optischer Messvorrichtungen zur Erfassung mechanischer Größen, noch spezifischer Messvorrichtungen mit in Lichtwellenleitern integrierten Sensoren, um die Messgenauigkeit zu erhöhen. Ferner betrifft die vorliegende Anmeldung ein System zur Justierung derartiger optischer Vorrichtungen.

STAND DER TECHNIK

Bei der Erfassung mechanischer Größen wie beispielsweise Kräften, Drehmomenten, Beschleunigungen, etc. gewinnt die optische Messtechnik zunehmend an Bedeutung. Hier werden faseroptische Messsysteme eingesetzt, die in optische Lichtwellenleiter eingebettete Sensorelemente aufweisen. Derartige Sensorelemente können beispielsweise als Faser-Bragg-Gitter-Sensoren ausgelegt sein. Auf diese Weise integrierte Sensoren werden mit optischer Strahlung in einem geeigneten Wellenlängenbereich bestrahlt, wobei in Abhängigkeit von der Auslegung des Sensorelements und der auf das Sensorelement einwirkenden mechanischen Größe ein Teil des eingestrahlten Lichts vom Sensor zurückgeworfen wird und einer Auswerte- und Analyseeinheit zugeführt werden kann.

Intensität und/oder Wellenlängenbereich von der am Sensorelement reflektierten optischen Strahlung bzw. von der durch das Sensorelement transmittierten optischen Strahlung weisen Merkmale auf, die durch die aufgebrachte mechanische Größe, beispielsweise eine zu messende Kraft, beeinflusst sind. Lichtwellenleiter-basierte bzw. faseroptische Kraftaufnehmer und entsprechende optische Messverfahren weisen vielfältige Anwendungen z.B. bei der Überwachung mechanischer Aufbauten, zur Detektion mechanischer Spannungen in Strukturen, bei der Ferndiagnose von Belastungen an Bauteilen, bei der Messung von Kräften, Drehmomenten etc. auf.

Die in die optische Sensorfaser integrierten faseroptischen Sensorelemente, wie beispielsweise Faser-Bragg-Gitter-Sensoren (FBG-Sensoren), sind empfindlich auf Dehnungen der Sensorfaser, wodurch das in der Faser reflektierte oder durch die Faser transmittierte Wellenlängenspektrum beeinflusst wird. Dehnungen der Faser und/oder Veränderungen der Faser-Bragg-Gitterstruktur hängen nunmehr nicht nur von der zu messenden mechanischen Größe, wie beispielsweise Kraft ab, sondern können durch unerwünschte Störgrößen wie beispielsweise Temperaturschwankungen beeinflusst werden. Derartige unerwünschte Einflüsse können etwa zu einer Verringerung der Messgenauigkeit bei der optischen Erfassung von kraftbezogenen Größen führen.

Ein anderer Störeinfluss ist bei bekannten faseroptischen Messsystemen auf Basis von Kantenfilteranordnungen relevant. Solche Messsysteme können als All-In-Fiber-basierte Anordnungen, integrierte optische Aufbauten oder (mikro-) optische Aufbauten ausgeführt sein.

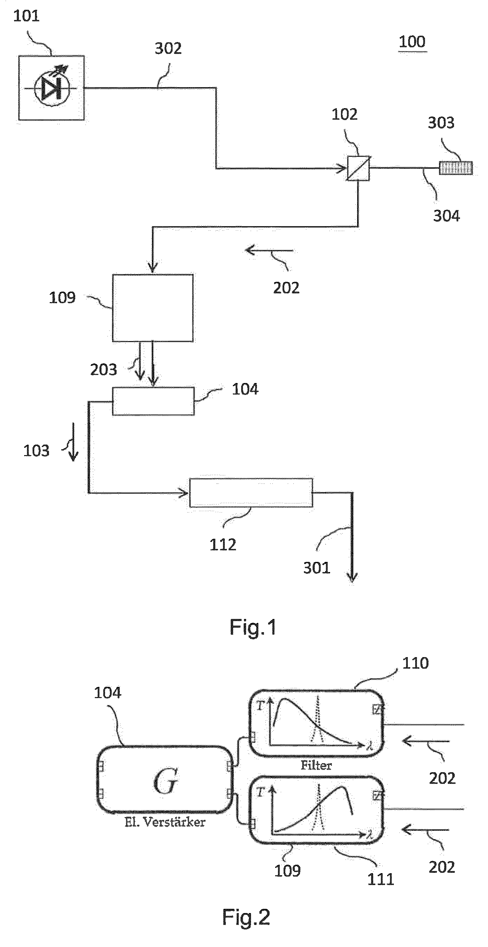

Fig. 1 zeigt ein schematisches Blockbild einer bekannten faseroptischen Messvorrichtung, die ausgelegt ist zur Erfassung mindestens einer zu messenden Größe. Die faseroptische Messvorrichtung weist eine Primärlichtquelle 101 zur Bereitstellung von optischer Strahlung auf, mit welcher mindestens ein optisches Faser-Bragg-Sensorelement 303 bestrahlt werden kann. Die Strahlung wird über eine optische Übertragungsfaser 302 zunächst auf einen Faserkoppler 102 geleitet, welcher dazu dient, Reflexionslicht nach einer Reflexion an dem optischen Sensorelement 303 über eine Sensorfaser 304 zurück zu einer optischen Auswerteeinheit 109 zu leiten.

Das von dem Sensorelement 303 reflektierte und über die optische Sensorfaser 304 und den Faserkoppler 102 geleitete, reflektierte Licht wird als Sekundärlicht 202 bezeichnet. Das Sekundärlicht 202 kann anschließend in der optischen Auswerteeinheit 109 analysiert werden. Die optische Auswerteeinheit 109 kann beispielsweise als ein optisches Filter ausgelegt werden, welches dazu dient, das Sekundärlicht 202 zu filtern, um anschließend gefilterte Bragg-Signale 203 zu erhalten. Die gefilterten Bragg-Signale weisen darin eingeprägt eine Information über die durch das Sensorelement reflektierte Wellenlänge auf, derart, dass über eine Wellenlängenbestimmung eine Dehnung des optischen Sensorelements (Faser-Bragg-Gitter) und damit eine auf das optische Sensorelement 303 aufgebrachte zu messende Kraft bestimmt werden kann. Eine derartige Bestimmung wird in einer mit der optischen Auswerteeinheit 109 in Verbindung stehenden Detektionseinheit 104 durchgeführt.

Fig. 2 zeigt eine Detailansicht der optischen Auswerteeinheit 109 und der Detektionseinheit 104 für den Fall einer ratiometrischen Faser-Bragg-Gitter-Messanordnung. Dabei wird das von dem optischen Sensorelement 303 kommende Sekundärlicht 202 in zwei optische Filter 110, 111 in Auswerteeinheit 109 geführt. Die Filter haben komplementär verlaufende Filterkurven, so dass bei einer Verschiebung der Wellenlänge des einfallenden Lichts 202 die Transmission durch den einen der beiden Filter steigt, während sie im Fall des anderen sinkt. Aus der Änderung der Ausgangspegel der beiden jeweils den Filtern 110, 111 nachgeordneten Licht-Sensoren (hier nicht dargestellt) kann nach einer Verstärkung auf die Änderung der Bragg-Wellenlänge des Sensorelements 303 aus Fig. 1 und somit auf die Veränderung der gemessenen mechanischen Größe geschlossen werden, wie bereits weiter oben beschrieben. Die Detektionseinheit 104 gibt entsprechende elektrische Ausgangssignale aus, welche anschließend einer mit der Detektionseinheit 104 betriebsmäßig verbundenen Bestimmungseinheit 112 zugeführt werden. Die Bestimmungseinheit 112 bestimmt nun ein Messergebnissignal 301, welches zum Beispiel ein Maß für die aus der Dehnung des optischen Sensorelements 303 bestimmbare mechanische Größe darstellt, etwa eine Kraft, die auf ein mit der Faser verbundenes strukturelles Element einer Maschine wirkt.

Im Allgemeinen weisen solche ratiometrischen faseroptischen Messsysteme zusätzliche Probleme im Vergleich zu konventionellen FBG-Messsystemen (mit einem Spektometer oder Laser) auf. So können sich etwa durch Temperatureinfluss die optischen Eigenschaften der optischen und/oder optoelektrischen Bauelemente ändern. Dies führt zu einer unerwünschten Temperaturdrift des Messsystems. Zudem kann optisches Hintergrundlicht - beispielsweise bedingt durch verschmutzte Steckverbinder, PC-Steckverbinder oder fehlerhafte Faserabschlüsse - zu Messabweichungen führen.

Eine bisher unbeachtete Einflussgröße auf ratiometrische Faser-Bragg-Gitter-Messsysteme (FBG) ist der Einfluss des Polarisationszustands des verwendeten Lichts (etwa von der Quelle 101) auf die Messung. (Faser-)optische Komponenten weisen im allgemeinen eine vom Polarisationszustand des einfallenden Lichts abhängige Transmittivität, Reflektivität und/oder Empfindlichkeit auf. Dies führt etwa im Fall des oben beschriebenen ratiometrischen Filterprinzips dazu, dass sich - abhängig vom Polarisationszustand - unterschiedliche effektive optische Filterkurven ergeben. Dies führt in der Konsequenz bei der Wellenlängenberechnung zu polarisationsbedingten Messabweichungen.

Das Dokument US 2010/0141930 A1 offenbart eine Messvorrichtung für eine physikalische Größe, wobei sich die Messvorrichtung der optischen Reflektrometrie im Frequenzbereich bedient, sowie ein Verfahren zum gleichzeitigen Messen einer Temperatur und einer Dehnung unter Verwendung der Vorrichtung. Die Messvorrichtung weist neben einer Lichtquelle in Form eines Lasers polarisationserhaltende lichtleitende Fasern und Faser-Bragg-Gitter auf.

Im Lichte des oben Beschriebenen ist es wünschenswert, ein optisches Messsystem zu haben, bei dem der Einfluss der Polarisierung des verwendeten Lichts auf die Messgenauigkeit minimiert oder ausgeschaltet werden kann.

ZUSAMMENFASSUNG DER ERFINDUNG

Die vorliegende Erfindung stellt ein Verfahren zur Justierung eines zur Erfassung einer mechanischen Größe ausgelegten faseroptischen Messsystems mit den Merkmalen des unabhängigen Anspruchs 1 bereit. Ferner stellt die vorliegende Erfindung ein faseroptisches Messsystem gemäß Anspruch 6 bereit.

Gemäß einer Ausführungsform stellt die vorliegende Erfindung ein Verfahren zur Justierung eines optischen Messsystems bereit. Das Verfahren umfasst das Bereitstellen eines optischen Messsystems, das als optische Elemente einen Strahlteiler; einen ersten Fotosensor, der mit einem ersten Teilstrahl aus dem Strahlteiler beaufschlagt wird; einen optischen Filter; einen in Strahlrichtung hinter dem optischen Filter liegenden zweiten Fotosensor, der mit einem zweiten Teilstrahl aus dem Strahlteiler beaufschlagt wird, umfasst. Dabei sind die Winkelstellung und relative Position zwischen mehreren der optischen Elemente justierbar eingerichtet. Das Verfahren umfasst weiter das Bereitstellen eines Geräts zum Bilden eines Differenzsignals aus dem Signal der beiden Fotosensoren; das Bereitstellen einer Lichtquelle mit sich zeitlich ändernder Polarisation, Einstrahlen des Lichts in den Strahlteiler, so dass beide Fotosensoren jeweils von einem Teilstrahl beaufschlagt werden; Bilden eines Differenzsignals der Ausgangssignale der Fotosensoren; Variieren von Position und/oder Winkelstellung mindestens eines der optischen Elemente, und Beobachtung des Differenzsignals, Bestimmen der Kombination von Winkelstellungen/Position der Elemente, bei der das Differenzsignal ein Minimum erreicht hat, und Einstellen der Winkelstellungen der optischen Elemente auf die bestimmten Werte.

Gemäß einer weiteren Ausführungsform stellt die vorliegende Erfindung ein System zur polarisationskompensierten Justierung eines optischen Messsystems bereit. Das System umfasst einen Strahlteiler, einen ersten Fotosensor, der zur Beaufschlagung mit einem ersten Teilstrahl aus dem Strahlteiler eingerichtet ist, einen optischen Filter, der zur Beaufschlagung mit einem zweiten Teilstrahl aus dem Strahlteiler eingerichtet ist; einen in Strahlrichtung hinter dem Filter angeordneter zweiter Fotosensor, und eine Lichtquelle für Licht mit zeitlich veränderlicher Polarisation, wobei die Polarisation durch aktive Elemente zeitlich verändert wird.

KURZE BESCHREIBUNG DER ZEICHNUNGEN

Ausführungsbeispiele sind in den Zeichnungen dargestellt und in der nachfolgenden Beschreibung näher erläutert. In den Zeichnungen zeigen:

Figur 1    ein bekanntes Messsystem nach dem Faser-Bragg-Prinzip;

Figur 2    eine schematische Teilansicht eines bekannten ratiometrischen Faser-Bragg-Messsystems;

Figur 3    eine schematische Ansicht eines Teils eines Systems zur Justierung einer faseroptischen Messvorrichtung gemäß Ausführungsbeispielen;

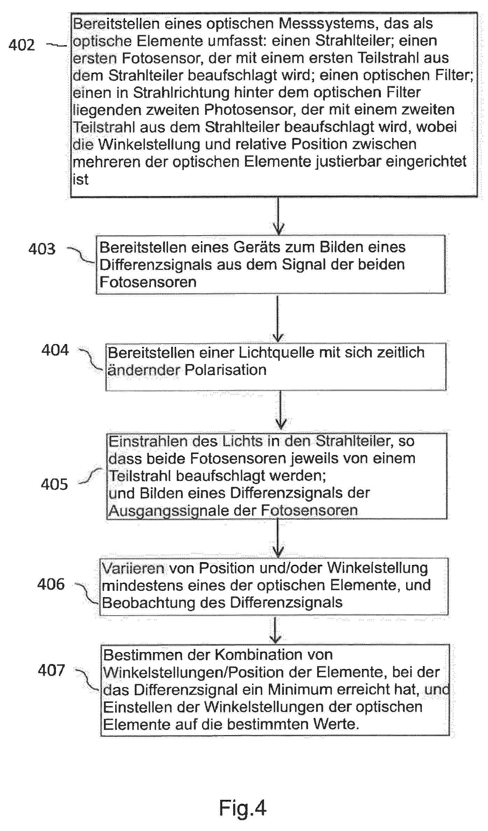

Figur 4    eine schematische Darstellung eines Verfahrens gemäß Ausführungsformen.

In den Zeichnungen bezeichnen gleiche Bezugszeichen gleiche oder funktionsgleiche Komponenten oder Schritte.

WEGE ZUR AUSFÜHRUNG DER ERFINDUNG

Im Folgenden wird detailliert Bezug genommen auf verschiedene Ausführungsformen der Erfindung, wobei ein oder mehrere Beispiele in den Zeichnungen veranschaulicht sind.

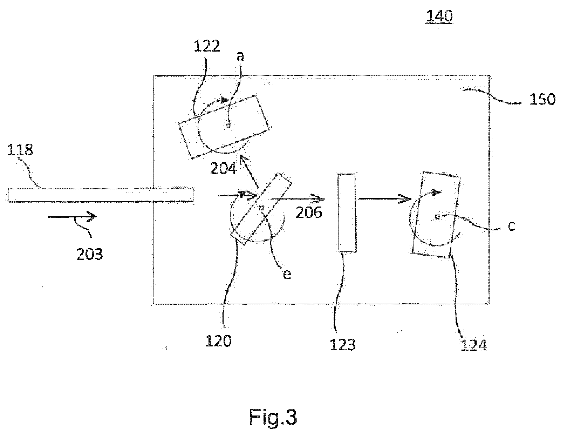

Ausführungsformen der Erfindung beziehen sich auf ein System zur Justierung eines optischen Messsystems und auf entsprechende Verfahren. Dabei wird von einem optischen Messsystem ausgegangen, das einen Strahlteiler, mindestens einen optischen Filter, und zwei Fotosensoren umfasst. Das System ist typischer- aber nicht notwendigerweise zum Beispiel auf einer Platte 150 montiert, so dass die Lichtwege zwischen den Komponenten in einer Ebene parallel zur Grundplatte verlaufen. Ein derartiger Aufbau ist in Fig. 3 dargestellt.

Fig. 3 zeigt einen Teil eines ratiometrischen Faser-Bragg-Gitter- (FBG)Messsystems gemäß Ausführungsbeispielen. Über eine Glasfaser 118 würde im Mess-Betrieb (der hier jedoch nicht im Vordergrund steht) das von einem FBG-Sensor 303 (hier nicht dargestellt, siehe etwa Fig. 1) reflektierte Licht 202 zu dem (mikro-)optischen Aufbau 140 geführt. Ein erster Teil 204 des einfallenden Lichts wird an einer Strahlteilervorrichtung 120 auf einen Referenzdetektor 122 geführt. Der nicht abgelenkte Teil 206 wird über ein optisches Filterelement 123 über einen Filter 123 zu einer Fotodiode 124 geführt. Aus den gemessenen Intensitätssignalen an Referenzdiode 122 und Filterfotodiode 124 (analog zu dem in Fig. 2 gezeigten Aufbau) wird über einen Algorithmus auf die Bragg-Wellenlänge des Sensors 303 geschlossen.

In Ausführungsbeispielen wird zur Justierung des Aufbaus 140 eigens zur Justierung erzeugtes Licht 203 über die Faser 118 in den optischen Aufbau geleitet, anstelle von Licht aus einem Faser-Bragg-Gitter wie bei einem späteren normalen Messprozess. Das Licht 203 zeichnet sich gemäß Ausführungsbeispielen durch eine zeitlich veränderliche Polarisation aus. Zum Beispiel kann dazu das Licht aus einem Laser durch eine Anordnung von mehreren λ/4-Plättchen geleitet werden, wobei die Plättchen durch eine mechanische Anordnung wie Piezo-Aktoren oder kleine Elektromotoren/Schrittmotoren periodisch oder zufallsgesteuert bewegt werden. Grundsätzlich kann ein λ/4-Plättchen Licht verzögern, das parallel zu einer Bauteilspezifischen Achse polarisiert ist, und zwar um eine viertel Wellenlänge - bzw. $\pi/2$ - gegenüber dazu senkrecht polarisiertem Licht. Es kann bei richtiger Einstrahlung aus linear polarisiertem Licht zirkular oder elliptisch polarisiertes Licht machen und aus zirkular polarisiertem Licht wieder linear polarisiertes. Gemäß Ausführungsbeispielen ist es unerheblich, welche tatsächliche Polarisation das so erzeugte beziehungsweise modifizierte Licht 203 zu welchem Zeitpunkt hat, wenn es in den optischen Aufbau geleitet wird, solange sich die Art der Polarisation zeitlich ändert. Dem Fachmann ist ohne weiteres verständlich, dass Licht mit zeitlich veränderlicher Polarisation auf eine Vielzahl von Arten erzeugt werden kann, die hier keiner näheren Erläuterung bedürfen.

Im Allgemeinen weisen die verwendeten optischen Komponenten 120, 122, 123, 124 des Aufbaus 140 einen polarisationsabhängigen Transmissionsverlust (PDL), bzw. eine polarisationsabhängige Empfindlichkeit auf. Dies sind im Beispiel der Fig. 3 der Strahlteiler 120, der optische Filter 123 und die beiden Fotosensoren 122, 124. Wie bereits eingangs erwähnt, können diese polarisationsabhängigen Anteile ein mit einem ratiometrischen optischen Messsystem ermitteltes Messergebnis beeinflussen.

Zur Minimierung des Einflusses von PDL-Elementen wird nun gemäß Ausführungsbeispielen durch gezielte Anordnung der einzelnen PDL-Elemente unter Berücksichtigung der System(-Filter-)funktion der Einfluss eines unbestimmten Polarisationszustands, bzw. -grades auf das Messergebnis minimiert.

Dazu wird das zeitlich polarisationsveränderte Licht 203 in den optischen Aufbau 140 über die Faser 118 eingestrahlt.

Die im Folgenden dargelegte Herleitung bezieht sich auf den kompakt darzustellenden Fall vollständig linear polarisierten Lichts. Das hierin beschriebene Verfahren zur Minimierung des Einflusses von PDL-Elementen auf das Messergebnis ist unabhängig von dieser Darstellung generell auf optische FBG-Kantenfiltermessanordnungen anwendbar, die als All-In-Fiber-basierte Anordnungen, integrierte optische Aufbauten oder (mikro-) optische Aufbauten ausgeführt sein können. Die zu erwartende Messabweichung $\Delta\lambda$ ist bei zwei Photodiodenkanälen gegeben zu (für den Fall linear polarisierten Lichts):

$$\Delta\lambda = \sum_i \frac{\partial \rho^{-1}}{\partial \Phi_i} \cdot \frac{\partial \Phi_i}{\partial \phi_i} \cdot \Delta\phi_i$$

wobei $\rho^{-1}$ = inverse Filterfunktion,
$\Phi_i$ = Ausgangssignal des i-ten Detektors,

$\phi_i$ = Polarisationswinkel im i-ten optischen Pfad

$$= \left.\frac{\partial \rho^{-1}}{\partial \Phi_1} \cdot \frac{\partial \Phi_1}{\partial \phi_1}\right|_{\phi_{1,0}} \cdot \Delta\phi_1 + \left.\frac{\partial \rho^{-1}}{\partial \Phi_2} \cdot \frac{\partial \Phi_2}{\partial \phi_2}\right|_{\phi_{2,0}} \cdot \Delta\phi_2$$

mit $\Delta\phi_1 = \Delta\phi_2 = \Delta\phi$ (keine Beeinflussung linear $\rightarrow$ elliptisch o.ä.)

$$= \Delta\phi \cdot \left[ \left.\frac{\partial \rho^{-1}}{\partial \Phi_1}\right|_{\lambda_B} \cdot \left.\frac{\partial \Phi_1}{\partial \phi}\right|_{\phi_1} + \left.\frac{\partial \rho^{-1}}{\partial \Phi_2}\right|_{\lambda_B} \cdot \left.\frac{\partial \Phi_2}{\partial \phi}\right|_{\phi_2} \right]$$

wobei $\lambda_B$ die Bragg-Wellenlänge ist.

Die Terme $\frac{\partial \Phi_i}{\partial \phi_i}$ hängen vom spektralen Gesamt-PDL $\Gamma_i$ des spezifischen optischen Pfads und dem spezifischen Winkel $\phi_i$ ab.

Um ein weitgehend oder völlig polarisationsunabhängiges Messsystem zu realisieren, wird nun gemäß Ausführungsbeispielen der Term in der eckigen Klammer minimiert. Dies wird typischerweise durch Verstellung der Winkelstellung der optischen Elemente 120, 122, 123, 124 im Verhältnis zu den jeweils einfallenden Lichtstrahlen 203, 204, 206 geschehen. In Ausführungsbeispielen werden dabei typischerweise der Strahlteiler 120 um eine Achse e verdreht, während die anderen Komponenten fixiert sind; oder der Strahlteiler 120 ist fixiert, und die (evtl. mechanisch verbundene) Einheit aus den Fotosensoren 122, 124 und dem Filter 123 wird als Ganzes um die Achse e des Strahlteilers 120 oder eine andere Achse verdreht. Ebenso können die beiden Fotosensoren 122, 124 jeweils um ihre Achsen a, c verdreht werden.

Die dargestellte obige Herleitung bezieht sich auf den Fall vollständig linear polarisierten Lichts, ohne polarisationsbeeinflussende Elemente (z.B. linear zu elliptisch) im optischen Pfad. Das Verfahren zur Minimierung des Einflusses des Polarisationsgrads/-zustands/-winkels ist jedoch für beliebige Lichtzustände anwendbar, allerdings gegebenenfalls analytisch nicht in der oben dargestellten geschlossenen Form darstellbar.

Auf die oben beschriebene Weise kann bei Verwendung von optischen/optoelektronischen Komponenten mit nicht-verschwindendem PDL die Messabweichung minimiert werden. Ausführungsformen der Erfindung beziehen sich also auf die Realisierung des Messsystems mit Komponenten mit nichtverschwindendem PDL mittels eines Verfahrens zur Minimierung der maximalen resultierenden Messabweichung.

Während der oben beschriebenen Verstellung wird ein Differenzsignal aus den Ausgangssignalen der beiden Fotosensoren 122, 124 gebildet, ähnlich wie in Bezug auf Fig. 2 beschrieben. Während dieses Prozesses wird wie oben beschrieben Licht 203 mit sich zeitlich ändernder Polarisation in den Aufbau 140 eingestrahlt. Während der Verstellung der Winkelstellungen wird nun das Differenzsignal gemessen. Das Differenzsignal kann in Beziehung zu den entsprechenden Winkelstellungen der justierten Komponenten in einer elektronischen Speichervorrichtung gespeichert werden. Mittels eines Algorithmus lässt sich nach Abschluss eines Messzyklus, das heißt typischerweise sequenzielles Durchfahren der Winkelbereiche der verstellbaren Komponenen, bestimmen, bei welcher Winkelstellung (etwa des Strahlteilers 120) oder bei welcher Kombination von Winkelstellungen der einzelnen Komponenten 120, 122, 123, 124 das Differenzsignal ein Minimum erreicht hat. Diese Winkelstellung wird dann am Ende des Justierverfahrens gemäß Ausführungsbeispielen eingestellt und die Komponenten fixiert, so dass keine weitere (etwa unbeabsichtigte) Verstellung möglich ist.

In einer Variante kann während der Verstellung der Winkelpositionen der Komponenten gleichzeitig auch die Wellenlänge der Lichtquelle verändert werden. Dazu kann etwa ein OPO-Laser eingesetzt werden, oder andere durchstimmbare Lichtquellen. In diesem Fall können während des Justageprozesses, bei der gleichen Winkelstellung einer Komponente, bei unterschiedlichen Wellenlängen verschiedene Differenzsignale entstehen. Diese können etwa sukzessive gemittelt abgespeichert werden, so dass nach einer gewissen Dauer der Justage zu einer bestimmten Winkelstellung ein Mittelwert des Differenzsignals aus mehreren unterschiedlichen Wellenlängen gebildet und gespeichert ist.

Der PDL ist technisch als positive Zahl definiert. Es sei darauf hingewiesen, dass bei Betrachtung des PDL bezüglich einer Referenzrichtung dieser durchaus negative Werte annehmen kann - das heißt, es liegt im konkreten Beispiel eine geringere Transmission bezüglich der Referenzrichtung vor.

Durch die beschriebene Variation der Winkelstellungen der optischen Elemente kann so über die Ermittlung des Differenzsignals bei unterschiedlichen Polarisationsarten und Lichtfrequenzen eine minimale polarisationsbedingte Messabweichung ermittelt werden, bzw. bei welchen Winkelstellungen und Positionen der optischen Element des Aufbaus 140 eine minimale, also optimierte Messabweichung erzielt werden kann.

Es sind prinzipiell beliebige Anordnungen der optischen Elemente des Aufbaus 140 realisierbar. Der optische Aufbau 140 ist zudem nicht auf (mikro-) optische Aufbauten beschränkt, auch rein faserbasierte oder filterbasierte Messaufbauten können durch geeignete Ausrichtung der Fasern und der optischen Komponenten hinsichtlich der zu erwartenden Messabweichung nach den obigen Verfahren gemäß Ausführungsformen optimiert werden.

Der Justagevorgang wird in Ausführungsbeispielen automatisiert unter Speicherung der jeweiligen Winkelparameter und der zugehörigen Differenz-Sensorausgangssignale durchgeführt. Das heißt, die Winkelverstellung wird von Stellgliedern, etwa Schrittmotoren, durchgeführt, die mit einer Steuereinheit gekoppelt sind (nicht dargestellt).

Faseroptische Messsysteme gemäß Ausführungsbeispielen können demgemäß ein Steuergerät und eine Speichereinrichtung aufweisen, die zur Ausführung der oben angeführten Verfahren eingerichtet sind. Solche faseroptischen Messsystems werden typischerweise zur Erfassung einer mechanischen Größe eingesetzt. Dabei wird das Faser-Bragg-Gitter mit der mechanischen Größe derart beaufschlagt, dass die Bragg-Wellenlängen des Faser-Bragg-Gitters durch die mechanische Größe verändert wird.

## Patentansprüche

1. Verfahren zur Justierung eines optischen Messsystems, umfassend:

   - Bereitstellen eines optischen Messsystems, das als optische Elemente umfasst:

      - einen Strahlteiler (120);
      - einen ersten Fotosensor (122), der mit einem ersten Teilstrahl (204) aus dem Strahlteiler (120) beaufschlagt wird;
      - einen optischen Filter (123);

   - einen in Strahlrichtung hinter dem optischen Filter liegenden zweiten Fotosensor (124), der mit einem zweiten Teilstrahl (206) aus dem Strahlteiler (120) beaufschlagt wird,

   wobei die Winkelstellung und relative Position zwischen mehreren der optischen Elemente (120, 122, 123, 124) justierbar eingerichtet ist;

      - Bereitstellen eines Geräts zum Bilden eines Differenzsignals aus dem Signal der beiden Fotosensoren (122, 124);
      - Bereitstellen einer Lichtquelle mit sich zeitlich ändernder Polarisation,
      - Einstrahlen des Lichts (203) in den Strahlteiler (120), so dass beide Fotosensoren (122, 124) jeweils von einem Teilstrahl (204, 206) beaufschlagt werden;
      - Bilden eines Differenzsignals der Ausgangssignale der Fotosensoren (122, 124);
      - Variieren von Position und/oder Winkelstellung mindestens eines der optischen Elemente (120, 122, 123, 124), und Beobachtung des Differenzsignals
      - Bestimmen der Kombination von Winkelstellungen/Position der Elemente (120, 122, 123, 124), bei der das Differenzsignal ein Minimum erreicht hat,

2. Verfahren nach Anspruch 1, ferner umfassend:

   - Variieren der Frequenz des eingestrahlten Lichts (203) zusätzlich zur Veränderung der Polarisation.

3. Verfahren zur Justierung eines Messsystems nach Anspruch 1 oder 2, wobei die jeweiligen Differenzsignale aus den Ausgangssignalen der Fotosensoren (122, 124) mit den zugehörigen Winkeldaten der einzelnen Komponenten in einer elektronischen Speichervorrichtung gespeichert werden.

4. Verfahren zur Justierung eines Messsystems nach einem der Ansprüche 1 bis 3, wobei nach Durchfahren des Justagebereichs der optischen Elemente (120, 122, 123, 124) automatisch bestimmt wird, bei welchen Winkelstellungen ein minimales Differenz-Ausgangssignal gemessen wurde, und woraufhin der jeweilige Fotosensor (122, 124) in die entsprechende Position gebracht und fixiert wird.

5. Verfahren zur Justierung eines Messsystems nach einem der vorhergehenden Ansprüche, wobei die Polarisation des eingestrahlten Lichts (203) durch bewegte λ/4-Plättchen erzeugt wird.

6.  System das dazu geeignet ist eine polarisationskompensierte Justierung eines optischen Messsystems vorzunehmen, umfassend:

    - einen Strahlteiler (120),
    - einen ersten Fotosensor (122), der dazu geeignet ist mit einem ersten Teilstrahl (204) aus dem Strahlteiler (120) beaufschlagt zu werden;
    - ein optisches Filter (123), das dazu geeignet ist mit einem zweiten Teilstrahl (206) aus dem Strahlteiler (120) beaufschlagt zu werden;
    - ein in Strahlrichtung hinter dem Filter (123) angeordneter zweiter Fotosensor (124),
    - eine Lichtquelle geeignet für Licht (203) mit zeitlich veränderlicher Polarisation, wobei die Polarisation durch aktive Elemente zeitlich verändert wird.

7.  System nach Anspruch 6, weiter umfassend:

    ein elektronisches Steuergerät, das dazu geeignet ist ein DifferenzAusgangssignal der Fotosensoren (122, 124) zu erfassen; sowie
    Stellglieder zur Variierung der Winkelstellung der Fotosensoren.

8.  System nach Anspruch 7, wobei das Steuergerät dazu ausgelegt ist, ein Justierverfahren nach einem der Ansprüche 1 bis 5 auszuführen.

9.  Verwendung eines Systems nach einem der Ansprüche 6 bis 8 zur Messung einer mechanischen Größe, wobei das System weiter ein Faser-Bragg-Gitter umfasst.

10. Verwendung nach Anspruch 9, umfassend:

    Beaufschlagen des Faser-Bragg-Gitters mit der mechanischen Größe derart, dass die Bragg-Wellenlängen des Faser-Bragg-Gitters durch die mechanische Größe verändert wird;
    Teilen des aus dem Faser-Bragg-Gitter heraustretenden Sekundärlichts mittels des Strahlteilers in einen ersten und einen zweiten Teilstrahl,
    Filtern des durch die Bragg-Wellenlänge des Faser-Bragg-Gitters in Abhängigkeit von der mechanischen Größe modifiziertem Sekundärlichts mittels des optischen Filters,
    Erfassen der Intensitäten der gefilterten ersten und zweiten Teilstrahlen des Sekundärlichts;
    Vergleichen der erfassten Intensitäten des gefilterten ersten und zweiten Sekundärlichts; und
    Bestimmen der mechanischen Größe aus dem Intensitätsvergleich.

**Claims**

1.  Method for the adjustment of an optical measurement system, comprising:

    - providing an optical measurement system, which comprises, as optical elements:

        - a beam splitter (120);
        - a first photo sensor (122), exposed by a first partial beam (204) from the beam splitter (120);
        - an optical filter (123);

        - a second photo sensor (124), arranged downstream of the optical filter, exposed by a second partial beam (206) from the beam splitter (120),

    wherein the angularity and relative position between multiple of said optical elements (120, 122, 123, 124) is arranged to be adjustable;

        - providing a device for generating a difference signal from the signals of both photo sensors (122, 124);
        - providing a light source with a polarization varying over time;
        - irradiating the light (203) into the beam splitter (120), so that both photo sensors (122, 124) are exposed by each respective partial beam (204, 206);
- generating a difference signal of the output signals of the photo sensors (122, 124);
- varying the position and/or angularity of at least one of the optical elements (120, 122, 123, 124), and observation of the difference signal; and
- determining the combination of angularity/position of the elements (120, 122, 123, 124) which achieves a minimum difference signal.

2. Method according to claim 1, further comprising:

- varying the frequency of the incident light (203) in addition to the variation of the polarization.

3. Method for the adjustment of a measurement system according to claim 1 or 2, wherein the respective difference signals from the output signals of the photo sensors (122, 124) are stored with the corresponding angular data of the individual components in an electronic storage device.

4. Method for the adjustment of a measurement system according to one of the claims 1 to 3, wherein after scanning over the adjustment range of the optical elements (120, 122, 123, 124), it is automatically determined which angularities result in a minimum difference output signal, and whereupon the respective photo sensor (122, 124) is attached and fixed in the corresponding position.

5. Method for the adjustment of a measurement system according to one of the previous claims, wherein the polarization of the incident light (203) is generated through shifting λ/4 plates.

6. System suitable for performing a polarization-compensated adjustment of an optical measurement system, comprising:

- a beam splitter (120);
- a first photo sensor (122), suitable for being exposed by a first partial beam (204) from the beam splitter (120);
- an optical filter (123), suitable for being exposed by a second partial beam (206) from the beam splitter (120);
- a second photo sensor (124) arranged downstream of the filter (123);
- a light source suitable for light (203) with periodically varying polarization, wherein the polarization is periodically varied by active elements.

7. System according to claim 6, further comprising:

- an electronic device suitable for determining the difference output signals of the photo sensors (122, 124); as well as
- regulator control elements for varying the angularity of the photo sensors.

8. System according to claim 7, wherein the controlling device is designed to perform an adjustment method according to one of the claims 1 to 5.

9. Use of a system according to one of the claims 6 to 8 for measuring a mechanical quantity, wherein the system further comprises a fiber Bragg grating.

10. Use according to claim 9, comprising:

- applying the mechanical quantity to the fiber Bragg grating, so that the Bragg wavelength of the fiber Bragg grating is changed by the mechanical quantity;
- splitting the secondary light output from the fiber Bragg grating by use of a beam splitter into a first and second partial beam;
- filtering the secondary light modified by the fiber Bragg grating depending on the mechanical quantity, by use of the optical filter;
- determining the intensity of the filtered first and second partial beams of secondary light;
- comparing the determined intensities of the filtered first and second secondary light; and
- determining the mechanical quantity from the intensity comparison.

**Revendications**

1. Procédé de réglage d'un système de mesure optique, comprenant :

    - la mise à disposition d'un système de mesure optique qui comprend comme éléments optiques :

        - un séparateur de faisceau (120) ;
        - un premier photocapteur (122) qui est soumis à un premier faisceau partiel (204) provenant du séparateur de faisceau (120) ;
        - un filtre optique (123) ;

    - un deuxième photocapteur (124) situé derrière le filtre optique dans le sens de faisceau, et qui est soumis à un deuxième faisceau partiel (206) provenant du séparateur de faisceau (120),

    sachant que la position angulaire et la position relative entre plusieurs des éléments optiques (120, 122, 123, 124) sont configurées de manière réglable ;

        - la mise à disposition d'un appareil servant à former un signal différentiel à partir du signal des deux photocapteurs (122, 124) ;
        - la mise à disposition d'une source lumineuse à polarisation variable dans le temps,
        - la projection de la lumière (203) dans le séparateur de faisceau (120) de telle sorte que les deux photocapteurs (122, 124) soient soumis respectivement à un faisceau partiel (204, 206) ;
        - la formation d'un signal différentiel des signaux de sortie des photocapteurs (122, 124) ;
        - le fait de faire varier la position et/ou la position angulaire d'au moins un des éléments optiques (120, 122, 123, 124), et l'observation du signal différentiel ;
        - le fait de déterminer la combinaison des positions angulaires/de la position des éléments (120, 122, 123, 124) auxquelles le signal différentiel a atteint un minimum.

2. Procédé selon la revendication 1, comprenant en outre :

    - le fait de faire varier la fréquence de la lumière projetée (203) en plus de modifier la polarisation.

3. Procédé de réglage d'un système de mesure selon la revendication 1 ou 2, sachant que les signaux différentiels respectifs provenant des signaux de sortie des photocapteurs (122, 124) sont enregistrés dans un dispositif d'enregistrement électronique avec les données angulaires associées des différents composants.

4. Procédé de réglage d'un système de mesure selon l'une des revendications 1 à 3, sachant qu'est déterminé automatiquement, après balayage de la plage de réglage des éléments optiques (120, 122, 123, 124), pour quelles positions angulaires un signal de sortie différentiel minimal a été mesuré, et suite à quoi le photocapteur (122, 124) respectif est mis dans la position correspondante et fixé.

5. Procédé de réglage d'un système de mesure selon l'une des revendications précédentes, sachant que la polarisation de la lumière projetée (203) est produite par des plaquettes $\lambda/4$ en mouvement.

6. Système qui est adapté à effectuer un réglage à compensation de polarisation d'un système de mesure optique, comprenant :

        - un séparateur de faisceau (120),
        - un premier photocapteur (122) qui est adapté à être soumis à un premier faisceau partiel (204) provenant du séparateur de faisceau (120),
        - un filtre optique (123) qui est adapté à être soumis à un deuxième faisceau partiel (206) provenant du séparateur de faisceau (120),
        - un deuxième photocapteur (124) disposé derrière le filtre (123) dans le sens de faisceau,
        - une source lumineuse adaptée à de la lumière (203) à polarisation variable dans le temps, sachant que la polarisation est modifiée dans le temps par des éléments actifs.

7. Système selon la revendication 6, comprenant en outre un appareil de commande électronique qui est adapté à acquérir le signal de sortie différentiel des photocapteurs (122, 124), ainsi que des actionneurs destinés à faire varier la position angulaire des photocapteurs.

8. Système selon la revendication 7, sachant que l'appareil de commande est conçu pour exécuter un procédé de réglage selon l'une des revendications 1 à 5.

9. Utilisation d'un système selon l'une des revendications 6 à 8 pour la mesure d'une grandeur mécanique, sachant que le système comprend en outre un réseau de Bragg sur fibre.

10. Utilisation selon la revendication 9, comprenant :

le fait de soumettre le réseau de Bragg sur fibre à la grandeur mécanique de telle manière que les longueurs d'onde de Bragg du réseau de Bragg sur fibre soient modifiées par la grandeur mécanique ;
la séparation de la lumière secondaire sortant du réseau de Bragg sur fibre au moyen du séparateur de faisceau en un premier et un deuxième faisceau partiel ;
le fait de filtrer, au moyen du filtre optique, la lumière secondaire modifiée par la longueur d'onde de Bragg du réseau de Bragg sur fibre en fonction de la grandeur mécanique ;
l'acquisition des intensités du premier et du deuxième faisceau partiel filtré de la lumière secondaire ;
la comparaison des intensités acquises de la première et de la deuxième lumière secondaire filtrée ; et
le fait de déterminer la grandeur mécanique à partir de la comparaison d'intensités.

Fig.1

Fig.2

Fig.3

402 — Bereitstellen eines optischen Messsystems, das als optische Elemente umfasst: einen Strahlteiler; einen ersten Fotosensor, der mit einem ersten Teilstrahl aus dem Strahlteiler beaufschlagt wird; einen optischen Filter; einen in Strahlrichtung hinter dem optischen Filter liegenden zweiten Photosensor, der mit einem zweiten Teilstrahl aus dem Strahlteiler beaufschlagt wird, wobei die Winkelstellung und relative Position zwischen mehreren der optischen Elemente justierbar eingerichtet ist

403 — Bereitstellen eines Geräts zum Bilden eines Differenzsignals aus dem Signal der beiden Fotosensoren

404 — Bereitstellen einer Lichtquelle mit sich zeitlich ändernder Polarisation

405 — Einstrahlen des Lichts in den Strahlteiler, so dass beide Fotosensoren jeweils von einem Teilstrahl beaufschlagt werden; und Bilden eines Differenzsignals der Ausgangssignale der Fotosensoren

406 — Variieren von Position und/oder Winkelstellung mindestens eines der optischen Elemente, und Beobachtung des Differenzsignals

407 — Bestimmen der Kombination von Winkelstellungen/Position der Elemente, bei der das Differenzsignal ein Minimum erreicht hat, und Einstellen der Winkelstellungen der optischen Elemente auf die bestimmten Werte.

Fig.4

**EP 2 856 096 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100141930 A1